# EUROPÄISCHE PATENTANMELDUNG

(11) **EP 1 434 293 A2**
(43) Veröffentlichungstag der Anmeldung: **30.06.2004**
(21) Anmeldenummer: 03029485.4
(22) Anmeldetag: 19.12.2003
(51) Int. Cl.: H01M 8/02

(54) **Bipolarplatte und Verfahren zu ihrer Herstellung**

(30) Priorität: 23.12.2002 DE 10261483
(71) Anmelder: BASF AKTIENGESELLSCHAFT, 67056 Ludwigshafen (DE)
(72) Erfinder: Bartholomeyzik, Willi, 67454 Hassloch (DE); Bohrmann, Gerhard, 67459 Böhl-Iggelheim (DE)
(74) Vertreter: Isenbruck, Günter, Dr.

(57) **Zusammenfassung**

Die Erfindung bezieht sich auf ein Verfahren zur Herstellung einer Bipolarplatte (1) für Brennstoffzellen-Stacks, wobei die Bipolarplatte (1) einen umlaufenden Rahmen (2) aus einem elektrisch nichtleitenden Werkstoff und einen von dem Rahmen (2) umschlossenen inneren Bipolarplattenbereich (3) aus dem elektrisch nichtleitenden Werkstoff mit Kanälen (5) für Gase und gegebenenfalls für Kühlmittel aufweist, mit folgenden Verfahrensschritten:
A) Einlegen eines sich im Wesentlichen in zwei Dimensionen erstreckenden elektrisch leitfähigen Gewebes (10) in ein Werkzeug zur Herstellung der Bipolarplatte (1), wobei das Gewebe (10) im Wesentlichen senkrecht zu der Ausrichtung der herzustellenden Bipolarplatte (1) eingelegt wird und beidseitig über die herzustellende Bipolarplatte (1) hinausragt,
B) Einbringen des elektrisch nichtleitenden Werkstoffes in das Werkzeug zum Formen des Rahmens (2) und des inneren Bipolarplattenbereichs (3), wobei der elek-trisch nichtleitende Werkstoff durch das Gewebe (10) hindurchreicht,
C) Entnehmen der geformten Bipolarplatte (1) aus dem Werkzeug und
D) beidseitiges Umbiegen des über den inneren Bipolarplattenbereich (3) hinausragenden Gewebes (10), so dass es den inneren Bipolarplattenbereich (3) aus dem nichtleitenden Werkstoff bedeckt.

## Beschreibung

Die vorliegende Erfindung betrifft eine Bipolarplatte für Brennstoffzellen-Stacks und ein Verfahren zur Herstellung der Bipolarplatte.

Bislang werden in Kraftfahrzeugen überwiegend Verbrennungsmotoren zum Antrieb eingesetzt, die Erdölprodukte als Treibstoff erfordern. Da die Ressourcen an Erdöl begrenzt sind und die Verbrennungsprodukte einen nachteiligen Umwelteinfluss haben können, wurden in den letzten Jahren verstärkt Forschungen nach alternativen Antriebskonzepten betrieben.

Die Nutzung von elektrochemischen Brennstoffzellen für mobile und stationäre Energieversorgungen findet dabei zunehmendes Interesse. Brennstoffzellen sind Energiewandler, die chemische Energie in elektrische Energie umwandeln. In der Brennstoffzelle wird das Prinzip der Elektrolyse umgekehrt.

Derzeit existieren unterschiedliche Typen von Brennstoffzellen, deren Wirkungsprinzip allgemein auf der elektrochemischen Rekombination von Wasserstoff und Sauerstoff zum Endprodukt Wasser basiert. Sie lassen sich nach Art des verwendeten leitfähigen Elektrolyten, dem Betriebstemperaturniveau und realisierbaren Leistungsbereichen einordnen. Für automobile Anwendungen sind Polymer-Elektrolyt-Membranbrennstoffzellen besonders geeignet. Sie werden üblicherweise bei einer Temperatur im Bereich von 50° bis 90°C betrieben. Da die elektrische Spannung einer einzelnen Zelle für praktische Anwendungen viel zu niedrig ist, müssen mehrere solcher Zellen in Reihe geschaltet werden zu einem Brennstoffzellenstapel oder -stack. Zur Zeit liefern PEM-Brennstoffzellen im kompletten Stack üblicherweise elektrische Leistungen im Bereich von 1 bis 75 kW (PKW) und bis 250 kW (NFZ, Omnibus).

In einer PEM-Brennstoffzelle wird die elektrochemische Reaktion von Wasserstoff mit Sauerstoff zu Wasser durch die Einfügung einer protonenleitenden Membran zwischen die Anoden- und die Katodenelektrode in die beiden Teilschritte Reduktion und Oxidation aufgeteilt. Hierbei erfolgt eine Ladungstrennung, die als Spannungsquelle genutzt werden kann. Entsprechende Brennstoffzellen sind beispielsweise in "Brennstoffzellen-Antrieb, innovative Antriebskonzepte, Komponenten und Rahmenbedingungen", Skript zur Fachkonferenz der IIR Deutschland GmbH, 29. bis 31. Mai 2000 in Stuttgart, zusammengefasst.

Eine einzelne PEM-Brennstoffzelle weist einen symmetrischen Aufbau auf. Auf eine Polymermembran folgen beidseitig je eine Katalysatorschicht und Gasverteilerschicht, an die sich eine bipolare Platte anschließt. Stromkollektoren dienen zum Abgreifen der elektrischen Spannung, während Endplatten die Zudosierung der Reaktionsgase und Abführung der Reaktionsprodukte sicherstellen.

In einem Brennstoffzellen-Stack ist eine Vielzahl von Zellen in elektrischer Reihe zueinander gestapelt, wobei sie voneinander durch eine impermiable, elektrisch-leitfähige, bipolare Platte getrennt sind, die als Bipolarplatte bezeichnet wird. Die Bipolarplatte verbindet dabei zwei Zellen mechanisch und elektrisch. Da die Spannung einer einzelnen Zelle im Bereich von 1 V liegt, ist es für praktische Anwendungen notwendig, zahlreiche Zellen hintereinander zu schalten. Häufig werden bis zu 400 Zellen durch Bipolarplatten getrennt, aufeinander gestapelt. Die Zellen werden dabei so aufeinander gestapelt, dass die Sauerstoffseite der einen Zelle mit der Wasserstoffseite der nächsten Zelle über die Bipolarplatte verbunden ist. Die Bipolarplatte erfüllt dabei mehrere Funktionen. Sie dient zur elektrischen Verschaltung der Zellen, zur Zuführung und Verteilung von Reaktanden (Reaktionsgasen) und Kühlmittel und zur Trennung der Gasräume. Dabei muss eine Bipolarplatte folgende Eigenschaften erfüllen:
- chemische Beständigkeit gegen feuchte oxidierende und reduzierende Bedingungen
- Gasdichtheit
- hohe Leitfähigkeit
- geringe Übergangswiderstände
- Maßhaltigkeit
- niedrige Kosten in bezug auf Material und Fertigung
- Gestaltungsfreiheit
- hohe mechanische Belastbarkeit
- Korrosionsbeständigkeit
- geringes Gewicht.

Derzeit werden drei unterschiedliche Arten von Bipolarplatten verwendet. Zum einen werden metallische Bipolarplatten eingesetzt, die beispielsweise aus Edelstählen bzw. beschichteten anderen Werkstoffen, wie Aluminium oder Titan aufgebaut sind.

Metallische Werkstoffe zeichnen sich durch hohe Gasdichtigkeit, Maßhaltigkeit und hohe elektrische Leitfähigkeit aus.

Graphitische Bipolarplatten können durch Pressen oder Fräsen in die geeignete Form gebracht werden. Sie zeichnen sich durch chemische Beständigkeit und geringe Übergangswiderstände aus, haben aber neben einem hohen Gewicht ein unzureichendes mechanisches Verhalten.

Komposit-Materialien sind aus speziellen Kunststoffen aufgebaut, die leitfähige Füllstoffe, etwa auf Basis von Kohlenstoff, aufweisen.

In der WO 98/33224 sind Bipolarplatten aus Eisenlegierungen beschrieben, die hohe Anteile an Chrom und Nickel aufweisen.

Aus der GB-A-2326017 sind Bipolarplatten aus Kunststoffmaterial bekannt, die durch elektrisch leitfähige Füllstoffe, wie Kohlepulver leitfähig gemacht werden. Zusätzlich kann eine oberflächliche Metallbeschichtung vorliegen, die über die Kanten der Bipolarplatte eine elektrisch leitfähige Verbindung zwischen zwei Zellen ermöglicht.

Gemäß WO 98/53514 wird ein Polymerharz durch Eintragen eines elektrisch leitfähigen Pulvers und eines Hydrophilisiermittels behandelt. Mit Siliciumdioxidteilchen und Graphitpulver gefüllte Polymermassen werden als Bipolarplatten eingesetzt. Insbesondere finden dabei Phenolharze Anwendung.

Bipolarplatten aus elektrisch nichtleitenden Werkstoffen, zum Beispiel thermoplastische Bipolarplatten, werden im Stand der Technik durch verschiedene Verfahren leitfähig gemacht. Beispielsweise wird ein elektrisch leitfähiger Füller wie Kohlenstoffpulver, Kohlenstofffasem oder Metallpartikel, zum Beispiel Pulver oder Späne von Titan, Aluminium, rostfreiem Stahl, Silber, Gold usw., dem elektrisch nichtleitenden Werkstoff hinzugefügt. Nachteilig ist dabei, dass die Modifizierung zum Beispiel eines Polymers mit einem leitfähigen Füllstoff eine Verschlechterung von Materialeigenschaften des Polymers (zum Beispiel Gießbarkeit, mechanische Eigenschaften) hervorruft.

Da Bipolarplatten kritische Funktionselemente von Brennstoffzellen-Stacks sind, die zu einem erheblichen Anteil zu den Kosten und dem Gewicht der Stacks beitragen, besteht große Nachfrage nach Bipolarplatten, die das vorstehend genannte Anforderungsprofil erfüllen und die Nachteile der bekannten Bipolarplatten vermeiden. Insbesondere sollte eine unaufwendige und kostengünstige Fertigung von Bipolarplatten möglich sein.

Die Aufgabe wird erfindungsgemäß gelöst durch ein Verfahren zur Herstellung einer Bipolarplatte für Brennstoffzellen-Stacks, wobei die Bipolarplatte einen umlaufenden Rahmen aus einem elektrisch nichtleitenden Werkstoff und einen von dem Rahmen umschlossenen inneren Bipolarplattenbereich aus dem elektrisch nichtleitenden Werkstoff mit Kanälen für Gase und gegebenenfalls für Kühlmittel aufweist, mit folgenden Verfahrensschritten:
A) Einlegen eines sich im Wesentlichen in zwei Dimensionen erstreckenden elektrisch leitfähigen Gewebes in ein Werkzeug zur Herstellung der Bipolarplatte, wobei das Gewebe im Wesentlichen senkrecht zu der Ausrichtung der herzustellenden Bipolarplatte eingelegt wird und beidseitig über die herzustellende Bipolarplatte hinausragt,
B) Einbringen des elektrisch nichtleitenden Werkstoffes in das Werkzeug zum Formen des Rahmens und des inneren Bipolarplattenbereichs, wobei der elektrisch nichtleitende Werkstoff durch das Gewebe hindurchreicht,
C) Entnehmen der geformten Bipolarplatte aus dem Werkzeug und
D) beidseitiges Umbiegen des über den inneren Bipolarplattenbereich hinausragenden Gewebes, so dass es den inneren Bipolarplattenbereich aus dem nichtleitenden Werkstoff bedeckt.

Gegenstand der vorliegenden Erfindung ist weiterhin eine Bipolarplatte für Brennstoffzellen-Stacks mit einem umlaufenden Rahmen aus einem elektrisch nichtleitenden Werkstoff und einem von dem Rahmen eingeschlossenen inneren Bipolarplattenbereich aus dem nichtleitenden Werkstoff, der Kanäle für Gase und gegebenenfalls für Kühlmittel aufweist und der von einem großen Anteil des Volumens eines sich im Wesentlichen in zwei Dimensionen erstreckenden elektrisch leitenden Gewebes beidseitig überdeckt ist, wobei das Gewebe mit einem geringeren Anteil seines Volumens zur Durchkontaktierung in dem elektrisch nichtleitenden Werkstoff des inneren Bipolarplattenbereichs enthalten ist.

Unter einem Brennstoffzellen-Stack ist in diesem Zusammenhang ein Stapel aus mindestens zwei jeweils durch die Bipolarplatten getrennten Einzelzellen zu verstehen. Derartige Brennstoffzellen-Stacks werden durch wiederholtes Aufeinanderschichten von Bipolarplatte, Gasverteilerschicht, Katalysatorschicht, Polymermembran, Katalysatorschicht und Gasverteilerschicht hergestellt. An beiden Enden weist ein Stack jeweils eine elektrisch leitfähige Elektrodenplatte anstelle einer Bipolarplatte auf.

Die erfindungsgemäße Bipolarplatte weist einen umlaufenden Rahmen und einen von dem Rahmen umschlossenen inneren Bipolarplattenbereich aus einem elektrisch nichtleitenden Werkstoff auf. Durch diese Konstruktion der Bipolarplatte wird eine Funktionstrennung vorgenommen. Der Rahmen dient zur Gestaltung der darin enthaltenen Zu- und Abführkanäle für Gase und Kühlmittel. Ferner können die mit Membran-Elektroden-Einheiten kombinierten erfindungsgemäßen Bipolarplatten über die Bipolarplattenrahmen miteinander verpresst und ohne zusätzliche Isolierung in einem Gehäuse befestigt werden, wobei in vorteilhafter Weise keine Kriechströme und Kurzschlüsse zwischen den Bipolarplatten auftreten. Der innere Bipolarplattenbereich sorgt mittels des elektrisch leitfähigen Gewebes für die elektrische Leitfähigkeit der erfindungsgemäßen Bipolarplatte. Ferner enthält er auf seinen Oberflächen Kanäle für Gase, das sogenannte "Flow-field", das die gasförmigen Reaktanden (zum Beispiel Wasserstoff und Sauerstoff) über die Anoden- bzw. Kathodenoberfläche verteilt.

Der innere Bipolarplattenbereich enthält weiterhin in seinem Inneren Kanäle für Kühlmittel. Die Einzelzellen eines Stacks müssen bei zunehmender Leistungsdichte gekühlt werden. In vielen Fällen reicht wegen der begrenzten Wärmeübertragung eine reine Luftkühlung nicht aus. Eine Flüssigkeitskühlung mit einem dem Verbrennungsmotor vergleichbaren Kühlkreislauf wird deshalb erforderlich. Daher wird die Kühlung direkt an der aktiven Zellfläche (innerer Bipolarplattenbereich) oder lokal an den Durchkontaktierungsstellen vorgenommen, so dass eine optimale Wärmeableitung realisiert ist.

Gase und Flüssigkeiten werden dem inneren Bipolarplattenbereich vorzugsweise über Kanäle in dem Rahmen der Bipolarplatte zugeführt und über weitere Kanäle in dem Rahmen wieder abgeführt.

In Schritt A) des erfindungsgemäßen Verfahrens wird in ein Werkzeug zur Herstellung der Bipolarplatte ein elektrisch leitfähiges Gewebe so eingelegt, dass es senkrecht zur herzustellenden Bipolarplatte ausgerichtet ist und beidseitig über diese hinausragt. Unter einem Gewebe sind in diesem Zusammenhang Draht- oder Fadenbahnen zu verstehen, deren Drähte bzw. Fäden aus elektrisch leitfähigem Material zu Maschen verflochten, verknotet oder nach einem anderen im Stand der Technik bekannten Verfahren miteinander verbunden sind. Dabei können auch mehrere Lagen dieser Draht- oder Fadenbahnen aufeinandergeschichtet und miteinander verbunden sein.

Anschließend wird in Schritt B) ein elektrisch nichtleitender Werkstoff zur Herstellung des Rahmens und des inneren Bipolarplattenbereichs in das Werkzeug eingebracht. Die gesamte Bipolarplatte wird folglich im Wesentlichen einstückig aus dem elektrisch nichtleitenden Werkstoff geformt, wobei der innere Bipolarplattenbereich mit Hilfe des Gewebes elektrisch leitfähig gemacht wird. Nach der Durchführung von Schritt B) des erfindungsgemäßen Verfahrens sind Rahmen und innerer Bipolarplattenbereich senkrecht zu dem Gewebe ausgerichtet, wobei das Gewebe durch den inneren Bipolarplattenbereich hindurchgreift und beidseitig von diesem absteht.

Nachdem die soweit geformte Bipolarplatte in Schritt C) dem Werkzeug entnommen wurde, erfolgt ein beidseitiges Umbiegen des Gewebes in Schritt D), so dass es beidseitig den elektrisch nichtleitenden Werkstoff im inneren Bipolarplattenbereich abdeckt. So wird in vorteilhafter Weise einerseits eine elektrische Durchkontaktierung des nichtleitenden inneren Bipolarplattenbereichs erreicht, da das Gewebe durch diesen von der Anoden- zur Kathodenseite hindurchreicht, und andererseits werden entlang der gesamten Oberfläche des Bipolarplattenbereichs die bei der Brennstoffzellenreaktion freiwerdenden Elektronen über das elektrisch leitfähige Gewebe abgeleitet.

Ein weiterer Vorteil des Gewebes ist, dass es in einem Polymer-Elektrolyt-Membran (PEM)-Brennstoffzellen-Stack eine Stützfunktion für die Polymer-Elektrolyt-Membran übernimmt. Die Membran kann im Brennstoffzellenbetrieb Druckdifferenzen zwischen ihren beiden Oberflächen ausgesetzt sein, wodurch sie im Stand der Technik einseitig an die im inneren Bipolarplattenbereich ausgebildeten Kanäle (das Flow-field) gepresst und dadurch beschädigt werden kann. Das elektrisch leitfähige Gewebe bei der erfindungsgemäßen Bipolarplatte stützt die Polymer-Elektrolyt-Membran, so dass eine dünnere Membran als im Stand der Technik eingesetzt werden kann, bzw. die Membran auch höheren Druckdifferenzen standhält.

In einer bevorzugten Ausführungsform der vorliegenden Erfindung wird das Gewebe nach dem Umbiegen in Schritt D) des erfindungsgemäßen Verfahrens zumindest teilweise am inneren Bipolarplattenbereich aus nichtleitendem Werkstoff befestigt. So kann das Gewebe beispielsweise entlang des äußeren Randes des inneren Bipolarplattenbereichs durch ein thermisches Verfahren, beispielsweise Heißnieten, fixiert werden. Dadurch wird eine stabile Befestigung des Gewebes an der Bipolarplatte gewährleistet.

In einer bevorzugten Ausführungsform der vorliegenden Erfindung handelt es sich bei dem nichtleitenden Werkstoff um einen Thermoplast oder einen Duroplast. Dabei können alle verstärkten und unverstärkten thermoplastischen oder duroplastischen Kunststoffe eingesetzt werden, die gegen feuchte oxidierende und reduzierende Bedingungen, wie sie in Brennstoffzellen herrschen, chemisch stabil sind. Zudem sollten sie gasdicht und maßhaltig sein. Vorzugsweise ist der nichtleitende Werkstoff ein Polymer aus der Gruppe Polyphenylensulfid (PPS), Liquid Cristal-Polyester (LCP), Polyoxymethylen (POM), Polyaryletherketon (PAEK), Polyamid (PA), Polybutylenterephthalat (PBT), Polyphenylenoxid (PPO), Polypropylen (PP) oder Polyethersulfon (PES). Im Allgemeinen werden kostengünstige, leicht verarbeitbare handelsübliche Werkstoffe bevorzugt, da daraus geringe Kosten für die Brennstoffzellenherstellung resultieren.

In einer bevorzugten Ausführungsform der vorliegenden Erfindung wird der elektrisch nichtleitende Werkstoff in Schritt B) des erfindungsgemäßen Verfahrens mittels Spritzgießen in das Werkzeug zur Herstellung der Bipolarplatte eingebracht. Das Spritzgießen ist ein Verfahren, bei dem in einem einzigen Arbeitsschritt fertig geformte Teile mit komplexer Geometrie hergestellt werden können. Da keine oder nur geringe Nacharbeit nötig ist, und die Herstellung von Spritzgussteilen in kurzen Taktzeiten möglich ist, handelt es sich beim Spritzgießen um ein ausgesprochenes Massenfertigungsverfahren. Beim erfindungsgemäßen Verfahren wird beispielsweise eines der oben genannten Polymermaterialien in eine Form gegossen, in der sich bereits senkrecht zur Gießrichtung ein Metallgeflecht befindet. Wird der Polymerwerkstoff direkt durch das metallische Gewebe hindurch gegossen, so entsteht eine durch das Gewebe hindurchreichende gasdichte Polymerwand.

Weitere mögliche Verfahren zum Formen des Rahmens und des inneren Bipolarplattenbereichs in Schritt B) des erfindungsgemäßen Verfahrens sind Pressen, Spritzpressen und Sintern.

Ein Vorteil des erfindungsgemäßen Verfahrens ist folglich, dass eine kostengünstige Herstellung der Bipolarplatte zum Beispiel im Spritzguss und aus einem Massenwerkstoff ermöglicht wird. Ferner werden die positiven Eigenschaften des nichtleitenden Werkstoffs (zum Beispiel eines Polymers) mit denen des elektrisch leitfähigen Gewebes (zum Beispiel eines Metall-Drahtgeflechtes) kombiniert. Durch die einheitliche Verwendung des elektrisch nichtleitenden Werkstoffes für den Rahmen und den inneren Bipolarplattenbereich kann die Bipolarplatte einstückig und hauptsächlich in einem Arbeitsschritt kostengünstig geformt werden. Anschließend ist lediglich das Umbiegen des Gewebes erforderlich, um die Bipolarplatte fertigzustellen. Ferner wird es durch die Verwendung des nichtleitenden Werkstoffes zur Fertigung von Rahmen und innerem Bipolarplattenbereich möglich, nahezu beliebige Geometrien herzustellen (zum Beispiel Kanäle für Gase und Kühlmittel im Rahmen und im inneren Bipolarplattenbereich). Insbesondere das Spritzgießen von Kunststoffmaterial erlaubt eine räumliche Gestaltung selbst komplexer geometrischer Strukturen. Beispielsweise kann das Flow-field zur gleichmäßigen Gasverteilung auf der Oberfläche des inneren Bipolarplattenbereiches meanderförmig verlaufende Kanäle enthalten. Durch das elektrisch leitfähige Gewebe kann eine einfache Durchkontaktierung mit einer hohen elektrischen Leitfähigkeit erreicht werden.

Das elektrisch leitfähige Gewebe ist in einer bevorzugten Ausführungsform der vorliegenden Erfindung ein Drahtgeflecht aus mindestens einem Werkstoff aus der Gruppe Nickel (rein), Nickellegierungen und hochlegierter Stahl. Die wichtigsten Legierungselemente für Stahl sind dabei Al, B, Bi, Co, Cr, Cu, La, Mn, Mo, Ni, Pb, Se, Si, Te, V, W und Zr.

Bei der erfindungsgemäßen Bipolarplatte ist der innere Bipolarplattenbereich aus dem nichtleitenden Werkstoff von einem großen Anteil des Volumens eines sich im Wesentlichen in zwei Dimensionen erstreckenden elektrisch leitenden Gewebes beidseitig überdeckt, wobei das Gewebe mit einem geringeren Anteil seines Volumens zur Durchkontaktierung in dem elektrisch nichtleitenden Werkstoff des inneren Bipolarplattenbereichs enthalten ist. Dabei dient der den nichtleitenden Werkstoff überdeckende Anteil des Gewebes dem Leiten von Elektronen, die bei der Brennstoffzellenreaktion frei werden. Der in dem nichtleitenden Werkstoff enthaltene Anteil des Gewebes tritt durch diesen hindurch und sorgt so für eine Durchkontaktierung von der einen auf die andere Seite der Bipolarplatte. Vorzugsweise ist der große Anteil des Gewebes, der den inneren Bipolarplattenbereich beidseitig überdeckt, mit dem geringeren Anteil des Gewebes, der in dem nichtleitenden Werkstoff des inneren Bipolarplattenbereichs enthalten ist, über Biegekanten verbunden. Die erfindungsgemäße Bipolarplatte wird vorzugsweise gemäß den erfindungsgemäßen Verfahren hergestellt.

Die erfindungsgemäßen Bipolarplatten können beispielsweise in Brennstoffzellen-Stacks zur Stromversorgung in mobilen und stationären Einrichtungen eingesetzt werden. Neben einer Hausversorgung kommen dabei insbesondere die Stromversorgung von Fahrzeugen wie Land-, Wasser- und Luftfahrzeugen sowie autarken Systemen wie Satelliten, Mess-Stationen oder Signaleinrichtungen in Betracht.

Gegenstand der vorliegenden Erfindung ist weiterhin ein Verfahren zur Herstellung einer Bipolarplatte für Brennstoffzellen-Stacks, wobei die Bipolarplatte einen umlaufenden Rahmen aus einem elektrisch nichtleitenden Werkstoff und einen von dem Rahmen umschlossenen inneren Bipolarplattenbereich aus dem elektrisch nichtleitenden Werkstoff mit Kanälen für Gase und gegebenenfalls für Kühlmittel aufweist, mit folgenden Verfahrensschritten:
i) Formen des Rahmens und des inneren Bipolarplattenbereichs aus dem elektrisch nichtleitenden Werkstoff, wobei in den inneren Bipolarplattenbereich mindestens ein Spalt eingebracht wird,
ii) Einlegen eines sich im Wesentlichen in zwei Dimensionen erstreckenden elektrisch leitfähigen Gewebes in den mindestens einen Spalt, so dass das Gewebe im Wesentlichen senkrecht zu der Ausrichtung der herzustellenden Bipolarplatte eingelegt wird und beidseitig über die herzustellende Bipolarplatte hinausragt,
iii) beidseitiges Umbiegen des über den inneren Bipolarplattenbereich hinausragenden Gewebes, so dass es den inneren Bipolarplattenbereich aus dem nichtleitenden Werkstoff bedeckt,
iv) Schließen des mindestens einen Spaltes unter Einbindung des durch den Spalt hindurchreichenden Gewebes durch gasdichtes Auffüllen mit einem Werkstoff.

Bei diesem Verfahren reicht der elektrisch nichtleitende Werkstoff nicht schon nach dem Formen des Rahmens und des inneren Bipolarplattenbereichs durch das Gewebe hindurch, sondern das Gewebe wird danach in mindestens einen Spalt im inneren Bipolarplattenbereich eingelegt und anschließend wird der Spalt mit einem Werkstoff gasdicht aufgefüllt. Rahmen und innerer Bipolarplattenbereich werden vorzugsweise im Spritzgießverfahren geformt. Der mindestens eine Spalt kann dann schon im Spritzgussteil enthalten sein oder nachträglich z.B. durch spanende Bearbeitung in dieses eingebracht werden. Der zum Auffüllen verwendete Werkstoff kann z.B. ein im Stand der Technik bekannter Klebstoff oder der elektrisch nichtleitende Werkstoff sein, aus dem der Rahmen und der innere Bipolarplattenbereich geformt sind. Die bevorzugten Ausführungsformen dieses erfindungsgemäßen Verfahrens (mit den Schritten i bis iv) entsprechen im wesentlichen den oben genannten bevorzugten Ausführungsformen des oben genannten erfindungsgemäßen Verfahrens (mit den Schritten A bis D).

Anhand der Zeichnung wird die vorliegende Erfindung nachstehend näher erläutert.

Es zeigt:
- Figur 1: eine Ausführungsform einer erfindungsgemäßen Bipolarplatte, die nach dem erfindungsgemäßen Verfahren hergestellt wird,
- Figur 2: das beidseitige Umbiegen des Gewebes,
- Figur 3: die fertiggestellte erfindungsgemäße Bipolarplatte gemäß Figur 1,
- Figur 4: eine weitere Ausführungsform einer erfindungsgemäßen Bipolarplatte, die nach dem erfindungsgemäßen Verfahren hergestellt wird und bei der das Gewebe in mehreren Stücken an verschiedenen Stellen des inneren Bipolarplattenbereichs eingelegt ist und
- Figur 5: eine weitere Ausführungsform einer erfindungsgemäßen Bipolarplatte, die nach dem erfindungsgemäßen Verfahren hergestellt wird.

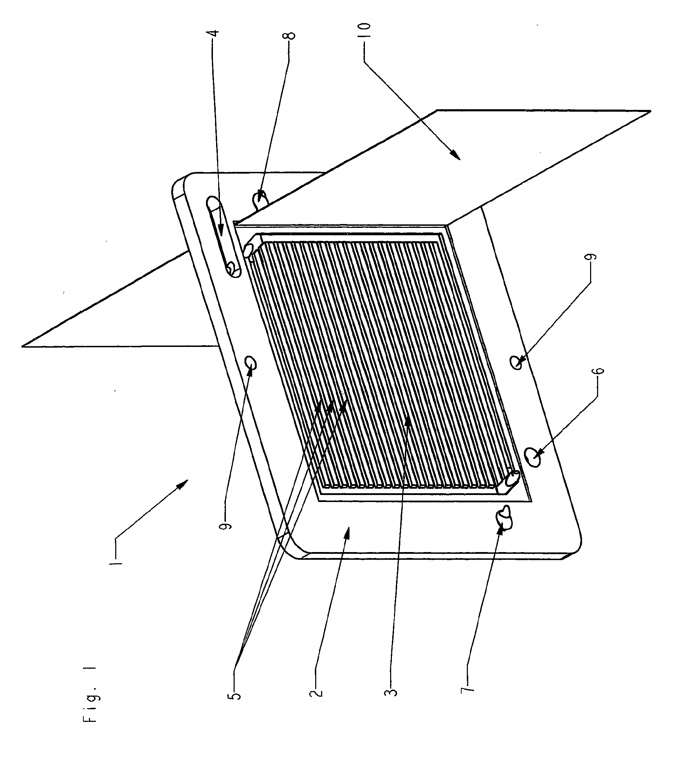

Figur 1 zeigt eine Ausführungsform einer erfindungsgemäßen Bipolarplatte, die nach dem erfindungsgemäßen Verfahren hergestellt wird.

Die Bipolarplatte 1 umfasst einen umlaufenden Rahmen 2 und einen inneren Bipolarplattenbereich 3 aus einem elektrisch nichtleitenden Werkstoff, vorzugsweise einem der oben genannten Polymerwerkstoffe. Der Rahmen 2 und der innere Bipolarplattenbereich 3 werden vorzugsweise einstückig und in einem Arbeitsgang durch ein Spritzgussverfahren aus dem nichtleitenden Werkstoff geformt.

Der Rahmen 2 weist Kanäle zum Zu- und Abführen von Flüssigkeiten und Gasen auf. Über einen ersten Eingang 4 kann beispielsweise H₂ zugeführt werden. Der Wasserstoff verteilt sich dann im Brennstoffzellenbetrieb auf der Anodenseite über die Kanäle 5 (Flow-field) auf der Oberfläche des inneren Bipolarplattenbereichs 3. Der nicht für die Brennstoffzellenreaktion verbrauchte Wasserstoff wird über den ersten Ausgang 6 wieder abgeführt. Ebenso existieren ein zweiter Eingang 7 und ein zweiter Ausgang 8 für das andere an der Brennstoffzellenreaktion beteiligte Gas (zum Beispiel O₂), das durch die (nicht in Figur 1 sichtbaren) Kanäle auf der Kathodenseite entlang der Oberfläche des inneren Bipolarplattenbereichs geleitet wird. Ferner enthält der Rahmen 2 (nicht dargestellte) weitere Kanäle für ein Kühlmittel, das durch das Innere des inneren Bipolarplattenbereichs 3 strömt. Des Weiteren sind im Rahmen 2 Öffnungen 9 enthalten, die zur Montage der Bipolarplatte 1 im Brennstoffzellen-Stack vorgesehen sind.

In der in Figur 1 dargestellten bevorzugten Ausführungsform der vorliegenden Erfindung ist ein elektrisch leitfähiges Gewebe 10 in einem Stück am Rand des inneren Bipolarplattenbereichs 3 eingelegt. Dabei durchdringt das Gewebe 10 den elektrisch nichtleitenden Werkstoff am Rand des inneren Bipolarplattenbereichs 3 und ragt senkrecht auf beiden Seiten über diesen hinaus. Die Fläche des jeweils auf einer Seite der Bipolarplatte 1 abstehenden Gewebes entspricht dabei im Wesentlichen der Oberfläche des inneren Bipolarplattenbereichs 3 aus elektrisch nichtleitendem Werkstoff auf dieser Seite. Bei dem Gewebe handelt es sich vorzugsweise um ein Drahtgeflecht aus Nickel, Nickellegierungen oder legiertem Stahl. Drahtdicke, Maschenweite und Gewebeform richten sich dabei nach der zu übertragenden elektrischen Leistung.

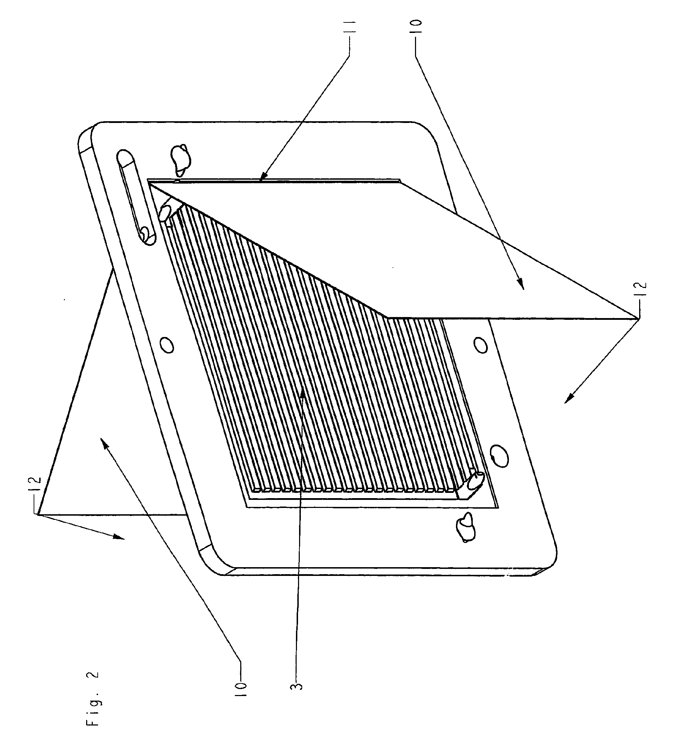

Figur 2 zeigt das beidseitige Umbiegen des Gewebes.

Diese Figur soll Schritt D) des erfindungsgemäßen Verfahrens verdeutlichen. Das Gewebe 10, das beidseitig über den inneren Bipolarplattenbereich 3 aus dem elektrisch nichtleitenden Werkstoff hinausragt, wird entlang der Biegekante 11 in Biegerichtung 12 umgebogen, so dass es den inneren Bipolarplattenbereich 3 bedeckt.

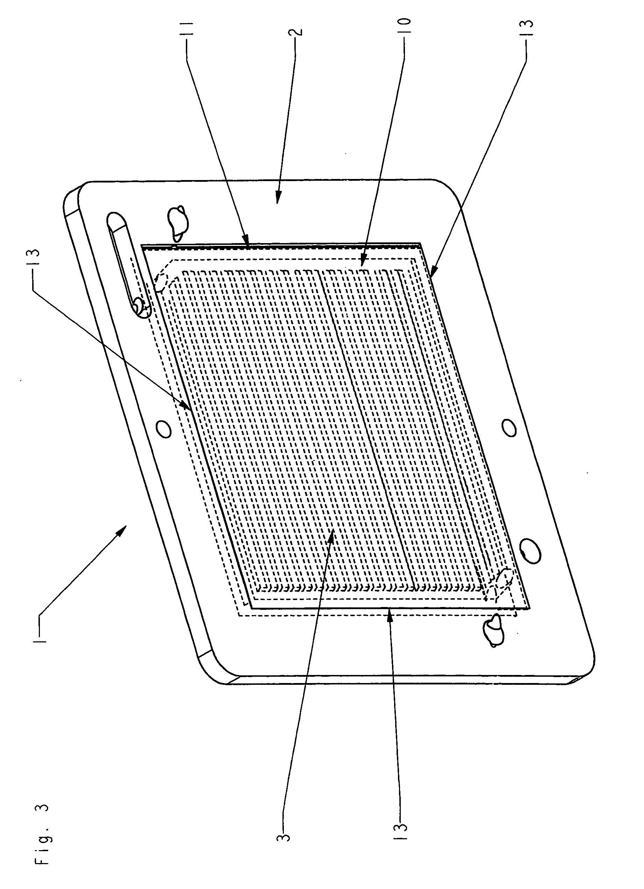

Figur 3 zeigt die fertiggestellte erfindungsgemäße Bipolarplatte gemäß Figur 1.

Nachdem das Gewebe 10 (wie in Figur 2 dargestellt) entlang der Biegekante 11 umgebogen wurde, liegt es bei der fertiggestellten Bipolarplatte 1 im inneren Bipolarplattenbereich 3 dicht an dem elektrisch nichtleitenden Werkstoff an und deckt diesen vollständig ab. Gegebenenfalls wird das Gewebe 10 nach dem Umbiegen noch an dem inneren Bipolarplattenbereich 3 (zum Beispiel an den Rändern 13) oder auch an dem Rahmen 2 befestigt, damit es bereits vor der Montage des Brennstoffzellen-Stacks fest an der Bipolarplatte fixiert ist.

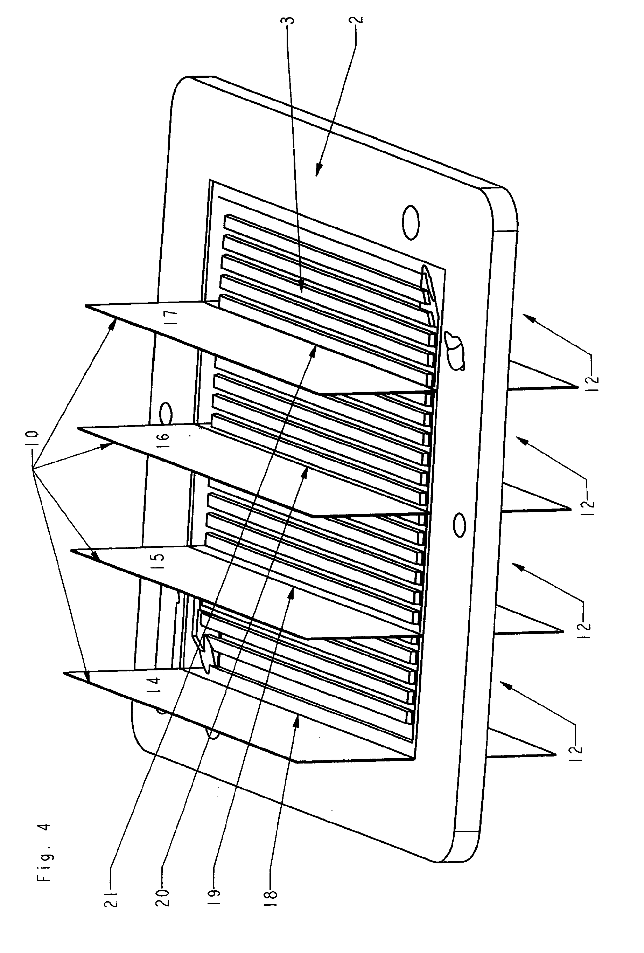

Figur 4 zeigt schematisch eine weitere Ausführungsform einer erfindungsgemäßen Bipolarplatte, die nach dem erfindungsgemäßen Verfahren hergestellt wird.

Bei dieser bevorzugten Ausführungsform der vorliegenden Erfindung wird das elektrisch leitfähige Gewebe 10 in mehreren Stücken an verschiedenen Stellen des von dem Rahmen 2 umgebenen inneren Bipolarplattenbereichs 3 eingebracht. Von dem Gewebe 10 ragen vier viereckige Stücke 14, 15, 16, 17 beidseitig senkrecht über den inneren Bipolarplattenbereich 3 aus elektrisch nichtleitendem Werkstoff hinaus. Die Flächen der über den inneren Bipolarplattenbereich 3 hinausragenden Gewebestücke entsprechen in ihrer Summe der (noch) nicht abgedeckten Oberfläche des inneren Bipolarplattenbereichs 3. Die Gewebestücke 14, 15, 16, 17 sind parallel zueinander in gleichen Abständen über den inneren Bipolarplattenbereich 3 verteilt. Um die Bipolarplatte 1 in diesem Stadium zu erhalten, wurden die Schritte A) bis C) des erfindungsgemäßen Verfahrens durchgeführt. Anschließend werden die viereckigen Gewebestücke 14, 15, 16, 17 beidseitig entlang ihren Biegekanten 18, 19, 20, 21 gemäß Verfahrensschritt D) in Biegerichtung 12 umgebogen, so dass sie den inneren Bipolarplattenbereich 3 aus nichtleitendem Werkstoff vollständig abdecken. Die fertiggestellte Bipolarplatte 1 enthält folglich eine Durchkontaktierung in den vier Bereichen, in denen die vier Gewebestücke 14, 15, 16, 17 durch den elektrisch nichtleitenden Werkstoff hindurchreichen.

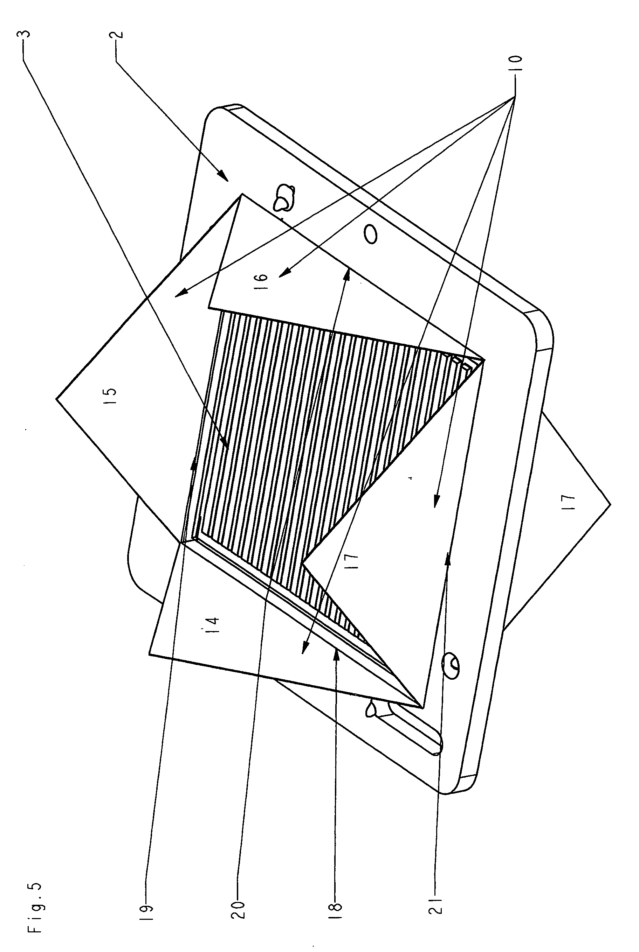

Figur 5 zeigt schematisch eine weitere Ausführungsform einer erfindungsgemäßen Bipolarplatte, die nach dem erfindungsgemäßen Verfahren hergestellt wird.

Auch bei dieser Ausführungsform der erfindungsgemäßen Bipolarplatte 1 enthält der innere Bipolarplattenbereich 3 das elektrisch leitfähige Gewebe 10 in mehreren Stücken 14, 15, 16, 17. Dabei schneiden die vier viereckigen Gewebestücke 14, 15, 16, 17 den inneren Bipolarplattenbereich 3 jeweils entlang einem seiner von dem Rahmen 2 begrenzten Ränder. Die Gewebestücke 14, 15, 16, 17 durchdringen den elektrisch nichtleitenden Werkstoff im Bereich ihrer einen Diagonalen, so dass dreieckige Gewebestücke über den inneren Bipolarplattenbereich 3 senkrecht hinausragen. Diese dreieckigen Gewebestücke werden jeweils entlang einer Biegekante 18, 19, 20, 21 in Richtung der Mitte des inneren Bipolarplattenbereichs 3 umgebogen, um die erfindungsgemäße Bipolarplatte 1 fertigzustellen. Die Summe der Dreiecksflächen entspricht dabei der gesamten Oberfläche des inneren Bipolarplattenbereichs 3, so dass dieser nach dem Umbiegen vollständig durch Gewebe 10 bedeckt ist.

Die Durchkontaktierung der Bipolarplatte 1 liegt bei dieser Ausführungsform im Randbereich des inneren Bipolarplattenbereichs 3.

### Bezugszeichenliste

- 1: Bipolarplatte
- 2: Rahmen
- 3: innerer Bipolarplattenbereich
- 4: erster Eingang (H₂)
- 5: Kanäle
- 6: erster Ausgang (H₂)
- 7: zweiter Eingang (O₂)
- 8: zweiter Ausgang (O₂)
- 9: Öffnungen
- 10: elektrisch leitfähiges Gewebe
- 11: Biegekante
- 12: Biegerichtung
- 13: Ränder
- 14: erstes viereckiges Gewebestück
- 15: zweites viereckiges Gewebestück
- 16: drittes viereckiges Gewebestück
- 17: viertes viereckiges Gewebestück
- 18: erste Biegekante
- 19: zweite Biegekante
- 20: dritte Biegekante
- 21: vierte Biegekante

## Patentansprüche

1. Verfahren zur Herstellung einer Bipolarplatte (1) für Brennstoffzellen-Stacks, wobei die Bipolarplatte (1) einen umlaufenden Rahmen (2) aus einem elektrisch nichtleitenden Werkstoff und einen von dem Rahmen (2) umschlossenen inneren Bipolarplattenbereich (3) aus dem elektrisch nichtleitenden Werkstoff mit Kanälen (5) für Gase und gegebenenfalls für Kühlmittel aufweist, mit folgenden Verfahrensschritten:
A) Einlegen eines sich im Wesentlichen in zwei Dimensionen erstreckenden elektrisch leitfähigen Gewebes (10) in ein Werkzeug zur Herstellung der Bipolarplatte (1), wobei das Gewebe (10) im Wesentlichen senkrecht zu der Ausrichtung der herzustellenden Bipolarplatte (1) eingelegt wird und beidseitig über die herzustellende Bipolarplatte (1) hinausragt,
B) Einbringen des elektrisch nichtleitenden Werkstoffes in das Werkzeug zum Formen des Rahmens (2) und des inneren Bipolarplattenbereichs (3), wobei der elektrisch nichtleitende Werkstoff durch das Gewebe (10) hindurchreicht,
C) Entnehmen der geformten Bipolarplatte (1) aus dem Werkzeug und
D) beidseitiges Umbiegen des über den inneren Bipolarplattenbereich (3) hinausragenden Gewebes (10), so dass es den inneren Bipolarplattenbereich (3) aus dem nichtleitenden Werkstoff bedeckt.

2. Verfahren zur Herstellung einer Bipolarplatte (1) für Brennstoffzellen-Stacks, wobei die Bipolarplatte (1) einen umlaufenden Rahmen (2) aus einem elektrisch nichtleitenden Werkstoff und einen von dem Rahmen (2) umschlossenen inneren Bipolarplattenbereich (3) aus dem elektrisch nichtleitenden Werkstoff mit Kanälen (5) für Gase und gegebenenfalls für Kühlmittel aufweist, mit folgenden Verfahrensschritten:
i) Formen des Rahmens (2) und des inneren Bipolarplattenbereichs (3) aus dem elektrisch nichtleitenden Werkstoff, wobei in den inneren Bipolarplattenbereich (3) mindestens ein Spalt eingebracht wird,
ii) Einlegen eines sich im Wesentlichen in zwei Dimensionen erstreckenden elektrisch leitfähigen Gewebes (10) in den mindestens einen Spalt, so dass das Gewebe (10) im Wesentlichen senkrecht zu der Ausrichtung der herzustellenden Bipolarplatte (1) eingelegt wird und beidseitig über die herzustellende Bipolarplatte (1) hinausragt,
iii) beidseitiges Umbiegen des über den inneren Bipolarplattenbereich (3) hinausragenden Gewebes (10), so dass es den inneren Bipolarplattenbereich (3) aus dem nichtleitenden Werkstoff bedeckt,
iv) Schließen des mindestens einen Spaltes unter Einbindung des durch den Spalt hindurchreichenden Gewebes (10) durch gasdichtes Auffüllen mit einem Werkstoff.

3. Verfahren gemäß einem der Ansprüche 1 oder 2, **dadurch gekennzeichnet, dass** das Gewebe (10) nach dem Umbiegen in Schritt D) bzw. in Schritt iii) zumindest teilweise am inneren Bipolarplattenbereich (3) aus nichtleitendem Werkstoff befestigt wird.

4. Verfahren gemäß einem der Ansprüche 1 bis 3, **dadurch gekennzeichnet, dass** der elektrisch nichtleitende Werkstoff in Schritt B) bzw. in Schritt i) mittels Spritzgießen in das Werkzeug eingebracht bzw. geformt wird.

5. Verfahren gemäß einem der Ansprüche 1 bis 4, **dadurch gekennzeichnet, dass** der nichtleitende Werkstoff ein Thermoplast oder ein Duroplast ist.

6. Verfahren gemäß einem der Ansprüche 1 bis 5, **dadurch gekennzeichnet, dass** der nichtleitende Werkstoff ein Polymer aus der Gruppe PPS, LCP, POM, PAEK, PA, PBT, PPO, PP oder PES ist.

7. Verfahren gemäß einem der Ansprüche 1 bis 6, **dadurch gekennzeichnet, dass** das Gewebe (10) ein Drahtgeflecht aus mindestens einem Werkstoff aus der Gruppe Nickel, Nickellegierungen oder hochlegierter Stahl ist.

8. Verfahren gemäß einem der Ansprüche 1 bis 7, **dadurch gekennzeichnet, dass** das Gewebe (10) in Schritt B) bzw. in Schritt ii) in einem Stück am Rand des inneren Bipolarplattenbereichs (3) eingelegt wird.

9. Verfahren gemäß einem der Ansprüche 1 bis 7, **dadurch gekennzeichnet, dass** das Gewebe (10) in Schritt B) bzw. in Schritt ii) in mehreren Stücken an verschiedenen Stellen des inneren Bipolarplattenbereichs (3) eingelegt wird.

10. Bipolarplatte (1) für Brennstoffzellen-Stacks mit einem umlaufenden Rahmen (2) aus einem elektrisch nichtleitenden Werkstoff und einem von dem Rahmen (2) umschlossenen inneren Bipolarplattenbereich (3) aus dem nichtleitenden Werkstoff, der Kanäle (5) für Gase und gegebenenfalls für Kühlmittel aufweist und der von einem großen Anteil des Volumens eines sich im Wesentlichen in zwei Dimensionen erstreckenden elektrisch leitenden Gewebes (10) beidseitig überdeckt ist, wobei das Gewebe (10) mit einem geringeren Anteil seines Volumens zur Durchkontaktierung in dem elektrisch nichtleitenden Werkstoff des inneren Bipolarplattenbereichs (3) enthalten ist.

11. Bipolarplatte gemäß Anspruch 10, **dadurch gekennzeichnet, dass** der große Anteil des Gewebes (10), der den inneren Bipolarplattenbereich (3) beidseitig überdeckt mit dem geringeren Anteil des Gewebes (10), der in dem elektrisch nichtleitenden Werkstoff des inneren Bipolarplattenbereichs (3) enthalten ist, über Biegekanten verbunden ist.
